# EUROPÄISCHE PATENTANMELDUNG

(11) **EP 2 587 513 A1**
(43) Veröffentlichungstag der Anmeldung: **01.05.2013**
(21) Anmeldenummer: 11186636.4
(22) Anmeldetag: 26.10.2011
(51) Int. Cl.: H01H 71/12

(54) **Installationsschaltgerät mit einer Stromsensoreinheit**

(71) Anmelder: ABB Schweiz AG, 5400 Baden (CH)
(72) Erfinder: Schalk, Adelbert, 79793 Wutöschingen (DE); Lutter, Karlheinz, 78176 Blumberg (DE)
(74) Vertreter: ABB Patent Attorneys

(57) **Zusammenfassung**

Die Erfindung betrifft ein Installationsschaltgerät (1), insbesondere einen Leitungsschutzschalter, Fehlerstromschutzschalter oder Motorschutzschalter, mit einem Gehäuse (6), mit wenigstens einem Strompfad, der über interne Stromleiter (2) zwischen wenigstens einer Eingangsklemme (3) und wenigstens einer Ausgangsklemme (4) verläuft, wobei das Installationsschaltgerät (1) im Inneren des Gehäuses (6) eine Stromsensoreinheit (5) umfasst. Die Stromsensoreinheit umfasst (5) eine Schnittstelle (7), wobei die Schnittstelle wenigstens zwei Datenanschlüsse und wenigstens zwei Stromanschlüsse hat, und wobei das Gehäuse (6) eine Schnittstellenöffnung (8) hat, die geeignet ist zur Aufnahme einer Anschlussvorrichtung zum Anschließen der Stromsensoreinheit (5) an einen außerhalb des Installationsschaltgerätes (1) befindlichen, Daten- und Stromleitungen enthaltenden, Bus (9), so dass dadurch die Stromsensoreinheit galvanisch von dem Strompfad getrennt und von außerhalb des Installationsschaltgerätes (1) mit Strom versorgt ist.

## Beschreibung

Die Erfindung betrifft ein Installationsschaltgerät, insbesondere einen Leitungsschutzschalter, Fehlerstromschutzschalter oder Motorschutzschalter, mit einem Gehäuse, mit wenigstens einem Strompfad, der über interne Stromleiter zwischen Eingang und Ausgang verläuft, wobei das Installationsschaltgerät eine Stromsensoreinheit umfasst, gemäß dem Oberbegriff des Anspruchs 1.

Installationsschaltgeräte dienen in elektrischen Installationsanlagen dem Leitungs-und/oder Personenschutz. Die sogenannten Leitungsschutzschalter (LS) unterbrechen den Stromfluss durch die überwachte Leitung bei Auftreten von Überstrom oder eines Kurzschlussstromes. Sie umfassen dazu elektromagnetische und thermische Auslöser sowie ein oder mehrere Schaltschlösser, die bei Auslösung durch einen der Auslöser den Strompfad zwischen Eingangs- und Ausgangsklemmen unterbrechen. Weiterhin sind Fehlerstromschutzschalter bekannt (FI-Schutzschalter), die zum Personenschutz dienen. Ein Fehlerstrom tritt dann auf, wenn die Summe der in die Anlage hinfließenden Ströme größer als die Summe der aus der Anlage herausfließenden Ströme ist, die Differenz fließt als Fehlerstrom über Erde ab. FI-Schutzschalter umfassen eine Einrichtung zur Fehlerstromerkennung, die bei Auftreten eines solchen einen Auslöser veranlasst, den Strompfad zwischen Eingangs- und Ausgangsklemmen zu unterbrechen. Ein Installationsschaltgerät im Sinne der Erfindung kann aber auch ein Überspannungsableiter sein.

Es ist bekannt, Informationen über die aktuelle Stromstärke, die durch den oder die Strompfade des Schaltgerätes fließen, zu erhalten, indem ein zusätzlicher Stromwandler und eine zusätzliche Hilfsspannungsquelle zur Versorgung des Stromwandlers eingebaut werden. Die EP 0 750 382 A2 zeigt dies beispielhaft an einem Niederspannungs-Leistungsschalter, der zum Abschalten großer Ströme unter Last dient und gegenüber einem normalen Leitungsschutzschalter ein großes Bauvolumen aufweist. Bei einem LS-Schalter bedeutet diese Lösung, dass ein zusätzlicher Neutralleiteranschluss erforderlich ist und zusätzlicher Platz für die Hilfsspannungsquelle im Gerät verloren geht. Daher verbietet sich eine solche Lösung für Leitungsschutzschalter aus praktischen Gründen wegen des geringen Platzangebotes im Inneren des Gehäuses von Leitungsschutzschaltern..

Die durch den zusätzlichen Stromwandler erhaltenen zusätzlichen Informationen werden beispielsweise zu Kontroll-, Mess- oder Überwachungszwecken zu einer Melde/Kontrolleinheit übertragen.

Im Zuge der zunehmenden Vernetzung von Schaltgeräten in Gebäudeautomatisierungssystemen kommt dieser Möglichkeit, Informationen über die Stromstärke, die über den oder die Strompfade durch das Schaltgerät fließen, zu erhalten und zu Überwachungs- und Kontrollzwecken an Melde/Kontrolleinheiten zu übertragen, eine erhöhte Bedeutung zu.

Die EP 2 282 321 A1 zeigt ein Modul zum Messen des in einem Leiter eines Niederspannungsverteilers fließenden Stroms. Das Modul mit dem darin enthaltenen Stromsensor wird von außen an das Gehäuse eines Leitungsschutzschalters angesteckt, wobei eine Befestigungszunge des Moduls in einer der beiden Klemmräume der Doppelstockklemme des Leitungsschutzschalters festgeklemmt wird. Dabei ist allerdings ein erhöhter Platzbedarf für die Kombination aus Leitungsschutzschalter und Strommessmodul nachteilig, wie auch die Blockierung einer der beiden Klemmenanschlussräume, die dann nicht mehr für beispielsweise den Anschluss einer Stromschiene zur Verfügung stehen.

Es ist daher Aufgabe der vorliegenden Erfindung, ein Schaltgerät, insbesondere einen Leitungsschutzschalter, zu schaffen, bei dem Informationen über die Stromstärke, die über den oder die Strompfade durch das Schaltgerät fließen, zu erhalten sind, ohne dass die äußeren Abmessungen des Leitungsschutzschalters oder die Anschlussmöglichkeiten beeinträchtigt werden und ohne dass eine Hilfsspannungsquelle im Leitungsschutzschalter erforderlich ist.

Die Aufgabe wird gelöst durch ein Installationsschaltgerät, insbesondere einen Leitungsschutzschalter, mit den Merkmalen des Anspruchs 1.

Erfindungsgemäß also ist die Stromsensoreinheit im Inneren des Gehäuses angeordnet, und sie umfasst eine Schnittstelle, wobei die Schnittstelle wenigstens zwei Stromanschlüsse hat, über die auch die Datenübertragung erfolgen könnte, oder wenigstens 2 Stromanschlüsse und 2 Datenleitungen, und wobei das Gehäuse eine Schnittstellenöffnung hat, die geeignet ist zur Aufnahme einer Anschlussvorrichtung zum Anschließen der Stromsensoreinheit an einen außerhalb des Installationsschaltgerätes befindlichen, Daten- und Stromleitungen enthaltenden, Bus, so dass dadurch die Stromsensoreinheit galvanisch von dem Strompfad getrennt und von außerhalb des Installationsschaltgerätes mit Strom versorgt ist.

Ergänzend könnte die Datenübertragung auch über die Stromanschlüsse des Schutzgerätes erfolgen, wobei dann allerdings keine galvanische Trennung mehr vorhanden ist.

Bei der erfindungsgemäßen Lösung ist die Stromsensoreinheit im Gehäuse integriert, so dass die äußeren Abmessungen und die Anschlussmöglichkeiten des Installationsschaltgerätes davon nicht beeinträchtigt werden. Daher ist es möglich, in einer bestehenden Installation einen vorhandenen Leitungsschutzschalter durch einen Leitungsschutzschalter mit integrierter Strommessung zu ersetzen, ohne dass zusätzlich Bauraum benötigt wird. Die Stromsensoreinheit wird von außerhalb des Installationsschaltgerätes mit Betriebsstrom versorgt, somit wird Platz an der Stromsensoreinheit gespart, so dass diese sehr kompakt ausgeführt werden und auch in den Innenraum eines Leitungsschutzschalters eingebaut werden kann. Die Information über den Betriebsstrom wird vorteilhafterweise über denselben Bus, der die Stromversorgung der Stromsensoreinheit sicherstellt, außen am Gehäuse des Installationsschaltgerätes abgegriffen.

Wenn die Stromsensoreinheit galvanisch von dem Strompfad getrennt ist, kann der Leitungsschutzschalter mit nur geringen Modifikationen zur Verwendung mit einer Stromsensoreinheit nachträglich ausgerüstet werden. Man spart damit Kosten, da für die Stromsensoreinheit kein eigenes Gehäuse mehr benötigt wird, und man spart Platz bei Einbau eines Installationsschaltgerätes mit integrierter Strommesseinrichtung in einer Niederspannungsverteilanlage, beispielsweise einem Schaltschrank.

Gemäß einer vorteilhaften Ausführungsform der Erfindung hat die Stromsensoreinheit eine Leiterplatte, an der ein Stromsensor und eine Mikroprozessorschaltung angeordnet sind. Die Mikroprozessorschaltung erfasst die Messdaten des Stromsensors, verarbeitet sie und sorgt für deren Übermittlung nach außen über die Datenleitungen.

Gemäß einer vorteilhaften Ausführungsform der Erfindung ist der Stromsensor mit einem ferromagnetischen Ringkern ausgebildet, der einen internen Stromleiter umfasst. Der Stromleiter, dessen Strom gemessen werden soll, ist von dem ferromagnetischen Ringkern koaxial umfasst. Damit wird ein Platzsparender Aufbau ermöglicht.

Gemäß einer vorteilhaften Ausführungsform der Erfindung ist axial in dem Ringkern ein Schlitz geführt, in dem eine Magnetfeldsonde angeordnet ist. Der Ausgang der Magnetsonde ist mit der Mikroprozessorschaltung strom leitend verbunden.

Der Stromsensor, der erfindungsgemäß eingesetzt ist, ist ein sogenannter open-loop-Sensor. Er misst direkt das Magnetfeld des stromdurchflossenen Stromleiters. Ein solcher Sensor kann sehr kompakt aufgebaut werden. Als interne Stromleiter kommen Drähte, Litzen oder Stromschienen aus Stanzbiegeteilen zur Anwendung. Diese haben einen geringen Querschnitt. Der Ringkern des Stromsensors kann in seinem Kerndurchmesser an den Querschnitt des Stromleiters angepasst werden. Dadurch ist es möglich, den Ringkern kompakt zu gestalten, und damit wird insgesamt auch die Abmessung der Stromsensoreinheit klein genug, so dass die Stromsensoreinheit noch im Innenraum eines Leitungsschutzschalters Platz findet.

Gemäß einer vorteilhaften Ausführungsform ist dabei die Stromsensoreinheit nahe einer Schmalseite des Gehäuses angeordnet, wobei die Leiterplatte parallel zu der Schmalseitenwand orientiert ist. Üblicherweise befindet sich nahe an der Schmalseitenwand eines Leitungsschutzschalters ein Klemmenaufnahmeraum, in dem eine Anschlussklemme untergebracht ist. Oft werden neben schraubenlosen Steckklemmen auch sogenannte Doppelstockklemmen eingesetzt. Bei diesen wird durch die Bewegung einer Klemmschraube ein, meist etwa kastenförmiger, Klemmrahmen auf und ab bewegt. In den Innenbereich des Klemmrahmens hinein ragt eine Stromschiene, die mit einem in das Geräteinnere weiter geführten internen Stromleiter verbunden ist. Die Stromschiene unterteilt den Klemmenraum im Inneren des Klemmenrahmens in einen oberen und einen unteren Klemmenbereich, so dass zwei verschiedene Anschlussleiter angeschlossen werden können. Der Klemmenaufnahmeraum ist üblicherweise durch eine innere Teilungswand von dem Geräteinneren und den dort angebrachten weiteren Baugruppen, wie beispielsweise dem thermischen und magnetischen Auslöser, dem Schaltwerk und der Kontaktstelle mit dem beweglichen Kontakthebel, abgetrennt. Die erfindungsgemäß sehr kompakte Bauweise der Stromsensoreinheit erlaubt es, diese beispielsweise nahe an eine solche Trennwand zu positionieren. Dadurch ist die Stromsensoreinheit galvanisch sowohl von der Anschlussklemme als auch von den anderen stromführenden Baugruppen im Geräteinneren getrennt. Die Leiterplatte der Stromsensoreinheit ist dann parallel zu der Bewegungsrichtung des Klemmenrahmens und damit parallel zu der Schmalseitenwand ausgerichtet.

Es ist allerdings selbstverständlich nicht zwingend erforderlich, dass die Leiterplatte parallel ausgerichtet ist, sondern sie kann im Sinne der Erfindung allgemein dort und in einer solchen Lage angebracht sein, wo es die Platz- und Produktionsverhältnisse vorteilhaft zulassen. Die Anordnung parallel zur Schmalseitenwand ist eine vorteilhafte Ausführungsform, andere Positionen sind denkbar.

Der Stromsensor ist so an der Leiterplatte angebracht, dass die den Innenraum des Klemmenrahmens unterteilende Stromschiene durch den freien Innenbereich des Ringkerns geführt ist. Das hat den Vorteil, dass ein Leitungsschutzschalter mit Stromsensor und ein Leitungsschutzschalter ohne Stromsensor sich lediglich durch das Vorhandensein der Stromsensoreinheit unterscheiden. Andere konstruktive Änderungen sind nicht erforderlich, insbesondere nicht betreffend die Außenabmessungen und die Anordnung der innen liegenden Baugruppen. Daher lässt sich die Fertigung eines Leitungsschutzschalters mit integriertem Stromsensor sehr einfach in den Fertigungslauf eines Leitungsschutzschalters einbinden, der Fertigungsprozess muss nur um wenige Schritte modifiziert werden, etwa um den Schritt des Einsetzens und Fixierens der Stromsensoreinheit.

Gemäß einer vorteilhaften Ausführungsform der Erfindung kann die Stromsensoreinheit auch nahe der Befestigungsseite des Gehäuses angeordnet sein und den dort zur Verfügung stehenden Raum im Inneren des Leitungsschutzschalters nutzen.

Gemäß einer vorteilhaften Ausführungsform der Erfindung ist die Schnittstellenöffnung an einer Schmalseite des Gehäuses angeordnet. Die Schnittstelle der Sensoreinheit ist dann so ausgeführt, dass Anschlussstifte zum elektrischen Kontaktieren der Sensoreinheit bis an die Schnittstellenöffnung herangeführt sind. In vorteilhafter Weise befindet sich die Schnittstellenöffnung in dieser Ausführungsform an der Seite, an der sich auch die Leitereinführöffnung zu der Anschlussklemme befindet, etwa zwischen dieser Leitereinführöffnung und der Befestigungsseite des Gehäuses. Die Busleitung zum Anschließen an die Stromsensoreinheit wird dann von der Kabeleinführseite her an dem Leitungsschutzschalter angebracht.

Gemäß einer weiteren vorteilhaften Ausführungsform der Erfindung ist die Schnittstellenöffnung an einer Frontseite des Gehäuses angeordnet. Die Schnittstelle der Sensoreinheit ist dann so ausgeführt, dass Anschlussstifte zum elektrischen Kontaktieren der Sensoreinheit bis an die Schnittstellenöffnung herangeführt sind. In vorteilhafter Weise befindet sich die Schnittstellenöffnung in dieser Ausführungsform an der Seite, an der sich auch die Schraubenzugangsöffnung zur Betätigung der Klemmschraube mittels eines Werkzeugs, beispielsweise eines Schraubendrehers, befindet, etwa zwischen dieser Schraubenzugangsöffnung und dem Betätigungsgriff an der Frontseite des Gehäuses. Die Busleitung zum Anschließen an die Stromsensoreinheit wird dann von der Front- oder Bedienseite her an dem Leitungsschutzschalter angebracht.

Gemäß einer vorteilhaften Ausführungsform der Erfindung weist das Installationsschaltgerät eine Temperaturerfassungseinheit zur frühzeitigen Fehlererkennung und/oder zur Verschleißerkennung im Installationsschaltgerät auf. Diese kann zur Messung einer Stromleitertemperatur, einer Klemmentemperatur, einer Schaltkammertemperatur oder einer Gehäusetemperatur vorgesehen sein. In vorteilhafter Weise weist die Temperaturerfassungseinheit einen im Gehäuseinneren angeordneten Temperaturfühler auf, der mit der Mikroprozessorschaltung strom leitend verbunden ist, so dass die Temperaturmesswerte ebenfalls bzw. zusätzlich zur Strommessung über die Datenleitung des Busses nach außen übermittelt werden können.

Die Strom- oder Temperaturmessung erkennt frühzeitig eine fehlerhafte Drift bei Strom und/oder Temperatur, die in nächster Zeit zum Ausfall der Anlage führen würde. Vom Wartungsteam können dann rechtzeitig entsprechende Massnahmen ergriffen werden. Dies ist vor allem in "Critical Power"- Anlagen vorteilhaft, bei denen ein plötzlicher Ausfall enorme Kosten- bzw. Imageschäden verursachen könnte.

Eine weitere vorteilhafte Anwendung ist, dass bei 3-phasigen Verbrauchernetzen eine symmetrische Verteilung der Ströme sichergestellt werden kann.

In einer anderen vorteilhaften Ausführungsform kann die Temperaturerfassungseinheit einen an der Außenseite des Gehäuses angeordneten Temperaturfühler aufweisen, der mit der Mikroprozessorschaltung strom leitend verbunden ist, so dass die Temperaturmesswerte ebenfalls über die Datenleitung des Busses nach außen übermittelt werden können.

Mit der Temperaturerfassungseinheit kann die Temperatur der Anschlussklemmen oder bestimmter Baugruppen oder Komponenten des Installationsschaltgerätes erfassen und einer Auswertung zuführen. Durch Auswertung des Temperaturverlaufes kann ein möglicherweise fehlerhafter Gerätezustand, der zu Ausfall oder Zerstörung des Installationsschaltgerätes führen würde, schon frühzeitig erkannt werden, da sich solche Zustände oft durch ungewöhnliche Temperaturerhöhung bei ansonsten noch unverdächtiger Gerätefunktion ankündigen. Der Temperaturverlauf kann auch als Eingangsgröße für Lebensdauermodelle herangezogen werden und somit eine vorausschauende Gerätediagnose ermöglichen.

Gemäß einer vorteilhaften Ausführungsform der Erfindung ist in der Oberfläche des Gehäuses eine von der Mikroprozessorschaltung angesteuerte Anzeigevorrichtung angeordnet. Diese kann beispielsweise die Strombelastung des Stromleiters anzeigen, typischerweise etwa als Prozentsatz des Nennstroms oder des zulässigen Überstroms oder dergleichen.

In einer vorteilhaften Ausführungsform kann die Anzeigevorrichtung wenigstens eine Leuchtdiode umfassen. Eine Anzeigevorrichtung mit Hilfe von Leuchtdioden ist eine besonders einfache und dennoch sehr wirksame Art der Anzeige. Dabei kann jede der Leuchtdioden einem bestimmten Strombereich oder Prozentbereich des zulässigen Nenn- oder Überstromes zugewiesen sein und aktiviert werden, wenn dieser Strombereich erreicht ist. Eine rote Leuchtdiode kann dann beispielsweise anzeigen, wenn der Strom einen kritischen Wertebereich erreicht hat.

Anhand der Zeichnungen, in denen zwei Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Figur 1: eine Einsicht in den Klemmenaufnahmeraum eines erfindungsgemäßen Installationsschaltgerätes mit eingebautem integriertem Stromsensormodul,
- Figur 2: eine Schrägaufsicht auf ein erfindungsgemäßes Installationsschaltgerät,
- Figur 3: eine Seitenansicht des erfindungsgemäßen Installationsschaltgerätes nach Figur 2 mit angesteckter Busleitung,
- Figur 4: eine Seitenansicht eines erfindungsgemäßen Installationsschaltgerätes in einer zweiten Ausführungsform, mit geöffnetem Klemmenabdeckraum.

In den Figuren werden gleiche oder gleichwirkende Bauteile oder Elemente mit denselben Bezugszeichen bezeichnet.

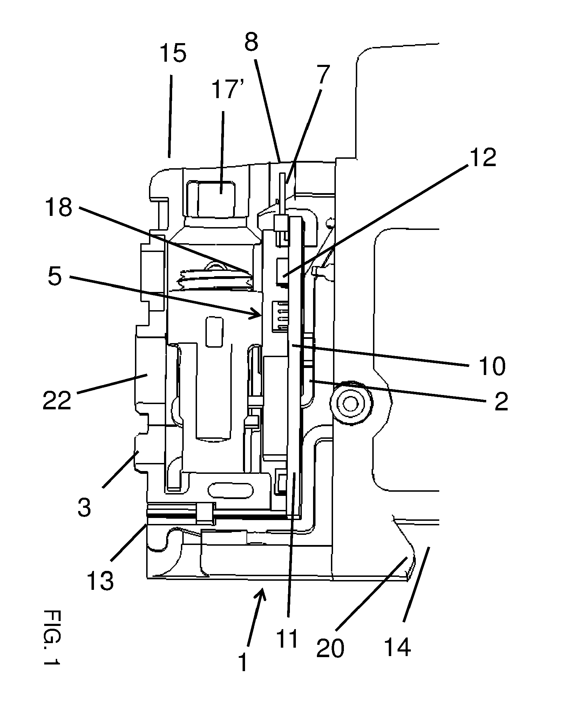

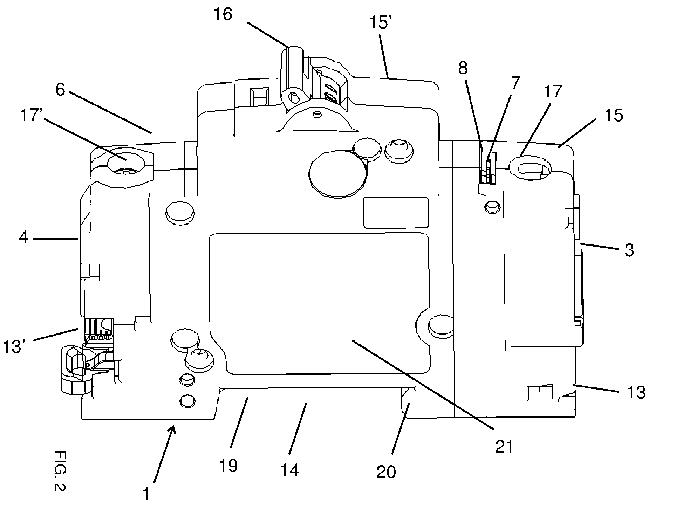

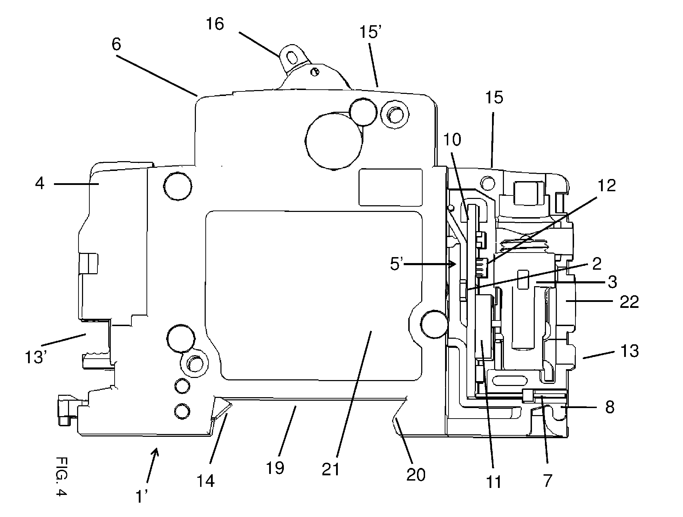

Die Figur 2 zeigt einen Leitungsschutzschalter1 mit einem Isolierstoffgehäuse 6. Das Gehäuse 6 hat eine vordere Frontseite 15', an der ein Bedienhebel 16 ausgebildet ist, mittels dessen sich die im Inneren des Gehäuses 6 befindliche Kontaktstelle manuell ein- und ausschalten lässt. Das Gehäuse hat weiter hintere Frontseiten 15, an denen sich die Zugangsöffnungen 17, 17' zu den Klemmschrauben 18 (siehe Figur 1) der Eingangs- bzw. der Ausgangsklemme 3, 4 befinden. Der Frontseite 15'gegenüber befindet sich die Befestigungsseite 14 mit einer Ausnehmung 19, die an einer Seite von einer feststehenden Nase 20 begrenzt ist. Die feststehende Nase ist Teil des Haltemechanismus, mit dem der Leitungsschutzschalter 1 auf einer Normprofiltragschiene aufgerastet werden kann, indem ein freier Schenkel der Normprofiltragschiene hinter die feststehende Nase 20 eingeschoben wird. Die Front-und Befestigungsseiten sind durch Breitseiten 21 und Schmalseiten 13, 13' verbunden. An den Schmalseiten 13, 13' befinden sich die Zugangsöffnungen 22, siehe Figur 1 und 4, zum Einführen von Anschlussleitern zu den Ein- bzw. Ausgangsklemmen 3, 4.

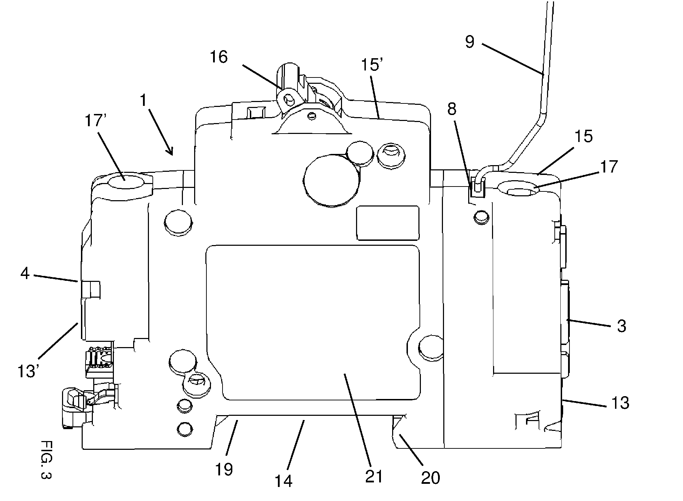

An der hinteren Frontseite 15, zwischen der Zugangsöffnung 17 und dem Übergang zu der vorderen Frontseite 15', befindet sich in dem Gehäuse 6 eine Schnittstellenöffnung 8 in Form eines in etwa rechteckigen Langloches. In dem Langloch erkennt man Anschlussstifte 7, die die Schnittstelle zu einer im Gehäuseinneren integrierten Stromsensoreinheit 5 mit Stromsensor und Mikroprozessorschaltung bilden, siehe Figur 1. In der Darstellung der Figur 3 ist in der Schnittstellenöffnung 8 eine Steckerklemme als Anschlussvorrichtung aufgenommen und stromleitend mit den Anschlussstiften 7 verbunden. Die Steckerklemme ist mit einer Busleitung 9 verbunden. Die Busleitung 9 hat zwei Datenleitungen und zwei Stromleitungen. Über die beiden Stromleitungen wird die Stromsensoreinheit 5 im Inneren des Gehäuses mit Strom versorgt, so dass diese galvanisch von den übrigen stromführenden Komponenten im Gehäuseinneren entkoppelt ist. Über die beiden Datenleitungen werden die Strommesswerte, zusammen mit möglicherweise in der Stromsensoreinheit noch weiteren erfassten oder ermittelten Daten, beispielsweise Temperaturmesswerte einer Temperaturmesseinrichtung, die ebenfalls mit der Mikroprozessorschaltung der Stromsensoreinheit verbunden sein kann, nach außen übertragen, beispielsweise an ein Kommunikationsmodul oder eine Steuer- und Kontrolleinrichtung eines Installationsbussystems.

Die Figur 1 zeigt Einzelheiten der Stromsensoreinheit und wie diese im Inneren des Gehäuses eingebaut ist. Die Stromsensoreinheit 5 hat eine Leiterplatte 10, an der ein Stromsensor 11 und eine Mikroprozessorschaltung 12 angeordnet sind. An der Leiterplatte 10 ist ein den internen Stromleiter 2, der von der Anschlussklemme 3 aus ins Innere des Gehäuses führt, weitgehend koaxial umfassender Ringkern, im Inneren des Kastens 11 angeordnet und nicht näher dargestellt, und eine Mikroprozessorschaltung 12 angeordnet. In einem axial durch den Ringkern geführten Schlitz ist ein als Magnetfeldsonde, beispielsweise als Hallsonde, ausgeführter Stromsensor angeordnet, dessen Ausgang mit der Mikroprozessorschaltung 12 stromleitend verbunden ist. Die Mikroprozessorschaltung 12 ist ihrerseits stromleitend mit den Anschlussstiften 7 der Schnittstelle verbunden, von denen zwei Anschlussstifte den beiden Stromanschlüssen und zwei Anschlussstifte den beiden Datenleitungen zugeordnet sind. Über die Busleitung 9, siehe Figur 3, kann die Mikroprozessorschaltung mit einem Kommunikationsmodul mit einer, beispielsweise 12V oder 24 V Gleichstrom aufweisenden, externen Spannungsquelle verbunden sein. Da die Stromsensoreinheit lediglich das Magnetfeld des in dem internen Stromleiter 2 fließenden Strom detektiert, ist es galvanisch von dem internen Stromleiter 2 und den übrigen stromführenden Komponenten im Inneren des Gehäuses getrennt und daher unempfindlich gegenüber der Wirkung von Kurzschlußströmen.

Die Stromsensoreinheit 5 ist nahe der Schmalseite 13 des Gehäuses 6 angeordnet, und zwar in dem Zwischenraum zwischen der Klemme 3 und dem von der Klemme 3 abgewandten Gehäuseinnenraum, wobei die Leiterplatte 10 parallel zu der Schmalseitenwand 13 orientiert ist.

Die Figur 4 zeigt eine weitere Ausführungsform eines Leitungsschutzschalters mit integriertem Stromsensor. Die dort gezeigte Ausführungsform unterscheidet sich von derjenigen nach Figur 1 bis 3 dadurch, dass hier die Schnittstellenöffnung 8 an einer Schmalseite 13 des Gehäuses 6 angeordnet ist. Die Schnittstelle 7 der Stromsensoreinheit 5' ist dann so ausgeführt, dass die Anschlussstifte 7 zum elektrischen Kontaktieren der Stromsensoreinheit rechtwinklig von der Leiterplatte 10 abgebogen sind und damit senkrecht zur Leiterplatte 10 verlaufend bis an die Schnittstellenöffnung 8 herangeführt sind. Die Schnittstellenöffnung 8 befindet sich in dieser Ausführungsform an der Seite, an der sich auch die Leitereinführöffnung 22 zu der Anschlussklemme 3 befindet, etwa zwischen dieser Leitereinführöffnung 22 und der Befestigungsseite 14 des Gehäuses 6. Die Busleitung zum Anschließen an die Stromsensoreinheit wird dann von der Kabeleinführseite, der Schmalseite 13, her an dem Leitungsschutzschalter 1 angebracht.

Für den Fachmann ist ohne weiteres ersichtlich, dass die Erfindung nicht auf die Einzelheiten der vorstehenden veranschaulichenden Ausführungsform beschränkt ist, und daß die vorliegende Erfindung in anderen speziellen Formen ausgeführt werden kann, ohne daß von wesentlichen Attributen derselben abgewichen wird, und es ist daher erwünscht, daß die vorliegenden Ausführungsformen in jeder Hinsicht als veranschaulichend und nicht beschränkend betrachtet werden.

### Bezugszeichenliste

| | |
|---|---|
| 1 | Installationsschaltgerät |
| 2 | Interner Stromleiter |
| 3 | Eingangsklemme |
| 4 | Ausgangsklemme |
| 5, 5' | Stromsensoreinheit |
| 6 | Gehäuse |
| 7 | Schnittstelle |
| 8 | Schnittstellenöffnung |
| 9 | Bus |
| 10 | Leiterplatte |
| 11 | Stromsensor |
| 12 | Mikroprozessorschaltung |
| 13, 13' | Schmalseite |
| 14 | Befestigungsseite |
| 15 | Hintere Frontseite |
| 15' | Vordere Frontseite |
| 16 | Bedienhebel |
| 17, 17' | Zugangsöffnung |
| 18 | Klemmschraube |
| 19 | Ausnehmung |
| 20 | Feststehende Nase |
| 21 | Breitseite |
| 22 | Leitereinführöffnung |

## Patentansprüche

1. Installationsschaltgerät (1) insbesondere Leitungsschutzschalter, Fehlerstromschutzschalter oder Motorschutzschalter, mit einem Gehäuse (6), mit wenigstens einem Strompfad, der über interne Stromleiter (2) zwischen wenigstens einer Eingangsklemme (3) und wenigstens einer Ausgangsklemme (4) verläuft, wobei das Installationsschaltgerät (1) eine Stromsensoreinheit (5) umfasst,
**dadurch gekennzeichnet, dass** die Stromsensoreinheit (5) im Inneren des Gehäuses (6) angeordnet ist und eine Schnittstelle (7) umfasst, wobei die Schnittstelle wenigstens zwei Datenanschlüsse und wenigstens zwei Stromanschlüsse hat, und wobei das Gehäuse (6) eine Schnittstellenöffnung (8) hat, die geeignet ist zur Aufnahme einer Anschlussvorrichtung zum Anschließen der Stromsensoreinheit (5) an einen außerhalb des Installationsschaltgerätes (1) befindlichen, Daten- und Stromleitungen enthaltenden, Bus (9), so dass dadurch die Stromsensoreinheit galvanisch von dem Strompfad getrennt und von außerhalb des Installationsschaltgerätes (1) mit Strom versorgt ist.

2. Installationsschaltgerät (1) nach Anspruch 1, **dadurch gekennzeichnet, dass** die Stromsensoreinheit (5) eine Leiterplatte (10) hat, an der ein Stromsensor (11) und eine Mikroprozessorschaltung (12) angeordnet sind.

3. Installationsschaltgerät (1) nach Anspruch 2, **dadurch gekennzeichnet, dass** der Stromsensor (11) mit einem ferromagnetischen Ringkern ausgebildet ist, der einen internen Stromleiter (2) umfasst.

4. Installationsschaltgerät (1) nach Anspruch 3, **dadurch gekennzeichnet, dass** axial in dem Ringkern ein Schlitz geführt ist, in dem eine Magnetfeldsonde angeordnet ist.

5. Installationsschaltgerät (1) nach Anspruch 4, **dadurch gekennzeichnet, dass** der Ausgang der Magnetsonde mit der Mikroprozessorschaltung (12) stromleitend verbunden ist.

6. Installationsschaltgerät (1) nach Anspruch 1, **dadurch gekennzeichnet, dass** die Stromsensoreinheit (5) nahe einer Schmalseite (13) des Gehäuses (6) angeordnet ist, wobei die Leiterplatte (10) parallel zu der Schmalseitenwand (13) orientiert ist.

7. Installationsschaltgerät (1) nach Anspruch 1, **dadurch gekennzeichnet, dass** die Stromsensoreinheit (5) nahe der Befestigungsseite (14) des Gehäuses (5) angeordnet ist.

8. Installationsschaltgerät (1) nach Anspruch 1, **dadurch gekennzeichnet, dass** die Schnittstellenöffnung (8) an einer Schmalseite (13) des Gehäuses (6) angeordnet.

9. Installationsschaltgerät (1) nach Anspruch 1, **dadurch gekennzeichnet, dass** die Schnittstellenöffnung (8) ist an einer Frontseite (15) des Gehäuses (6) angeordnet ist.

10. Installationsschaltgerät (1) nach Anspruch 1, **dadurch gekennzeichnet, dass** das Installationsschaltgerät (1) eine Temperaturerfassungseinheit zur Fehlererkennung und/oder zur Verschleißerkennung im Installationsschaltgerät aufweist.

11. Installationsschaltgerät (1) nach Anspruch 10, **dadurch gekennzeichnet, dass** die Temperaturerfassungseinheit zur Messung einer Stromleitertemperatur, einer Klemmentemperatur, einer Schaltkammertemperatur oder einer Gehäusetemperatur vorgesehen ist.

12. Installationsschaltgerät (1) nach Anspruch 10, **dadurch gekennzeichnet, dass** die Temperaturerfassungseinheit einen im Gehäuseinneren angeordneten Temperaturfühler aufweist, der mit der Mikroprozessorschaltung (12) stromleitend verbunden ist.

13. Installationsschaltgerät (1) nach Anspruch 10, **dadurch gekennzeichnet, dass** die Temperaturerfassungseinheit einen an der Außenseite des Gehäuses (6) angeordneten Temperaturfühler aufweist, der mit der Mikroprozessorschaltung (12) stromleitend verbunden ist.

14. Installationsschaltgerät (1) nach Anspruch 1, **dadurch gekennzeichnet, dass** in der Oberfläche des Gehäuses (6) eine von der Mikroprozessorschaltung (12) angesteuerte Anzeigevorrichtung angeordnet ist.

15. Installationsschaltgerät (1) nach Anspruch 14, **dadurch gekennzeichnet, dass** die Anzeigevorrichtung wenigstens eine Leuchtdiode umfasst.
